# EUROPÄISCHE PATENTANMELDUNG

(11) **EP 4 763 645 A1**
(43) Veröffentlichungstag der Anmeldung: **24.06.2026**
(21) Anmeldenummer: 25214302.9
(22) Anmeldetag: 07.11.2025
(51) Int. Cl.: B60W 30/17, B60W 30/18

(54) **VERFAHREN UND SYSTEM ZUR STEUERUNG EINER ADAPTIVEN GESCHWINDIGKEITSREGELVORRICHTUNG IN EINEM KRAFTFAHRZEUG UND KRAFTFAHRZEUG**

(30) Priorität: 17.12.2024 DE 102024138310
(71) Anmelder: Volkswagen Aktiengesellschaft, 38440 Wolfsburg (DE)
(72) Erfinder: Michael, Oliver, 38440 Wolfsburg (DE)

(57) **Zusammenfassung**

Die Erfindung betrifft Verfahren zur Steuerung einer adaptiven Geschwindigkeitsregelvorrichtung (20) in einem Kraftfahrzeug (10), umfassend die Schritte: Überwachung eines vor dem Kraftfahrzeug (10) befindlichen Verkehrsbereichs; Ermitteln, ob sich im vor dem Kraftfahrzeug (10) befindlichen Fahrweg ein kollisionsrelevantes Objekt (12) befindet; Ansteuern der adaptiven Geschwindigkeitsregelvorrichtung (20) zur Durchführung einer Verzögerung mit einer vordefinierten Bremswirkung des Kraftfahrzeugs (10), wenn ein kollisionsrelevantes Objekt (12) ermittelt wurde und ein vordefinierter Mindestabstand zu dem vor dem Kraftfahrzeug (10) befindlichen kollisionsrelevanten Objekt (12) unterschritten wird; Überprüfen, ob ein Fahrer des Kraftfahrzeugs (10) während der durch die adaptive Geschwindigkeitsregelvorrichtung (20) durchgeführten Verzögerung ein Bremspedal betätigt; wobei die durch die Pedalwirkung angeforderte Bremswirkung ausgeübt wird, falls diese die durch die adaptive Geschwindigkeitsregelvorrichtung (20) ausgeübte Bremswirkung überschreitet, ohne dabei die adaptive Geschwindigkeitsregelvorrichtung (20) zu deaktivieren. Erfindungsgemäß ist auch ein System (30) vorgesehen, welches dazu ausgelegt ist, das erfindungsgemäße Verfahren durchzuführen, sowie ein Kraftfahrzeug (10), welches das erfindungsgemäße System (30) aufweist.

## Beschreibung

Die vorliegende Erfindung betrifft ein Verfahren zur Steuerung einer adaptiven Geschwindigkeitsregelvorrichtung in einem Kraftfahrzeug sowie ein System zur Durchführung eines solchen Verfahrens. Ferner betrifft die Erfindung ein Kraftfahrzeug mit einem derartigen System.

Verfahren zur Deaktivierung automatisierter Fahrfunktionen in Kraftfahrzeugen sind aus dem Stand der Technik bekannt.

DE 10 2022 211 908 A1 betrifft ein Verfahren zur Deaktivierung einer assistierten oder automatisierten Fahrfunktion bei einem Kraftfahrzeug, bei dem die Fahrfunktion einen fahrerunabhängigen Bremseneingriff durchführt. Die Deaktivierung der Fahrfunktion erfolgt durch die Betätigung einer Bremswunschvorgabeeinrichtung über einen gewissen Zeitraum durch den Fahrer oder wenn die vom Fahrer angeforderte Intensität der Bremsung größer ist als die von der Fahrfunktion ausgeübte Intensität der Bremsung.

DE 101 44 797 A1 betrifft die Einstellung autonomer Fahrfunktionen in einem Fahrzeug, wobei der Übergang vom autonomen Fahren zum Fahren durch den Fahrer durchgeführt wird. Hierbei wird eine manuelle Fahranforderung mit einem aktuell herrschenden Zustand einer Fahrzeugkomponente verglichen. Falls die manuelle Fahreranforderung kleiner ist als der autonome Wert, wird der in der betreffenden Fahrzeugkomponente aktuell herrschende Zustand so lange beibehalten, bis die manuelle Fahreranforderung einen gegebenen bzw. bestimmbaren Referenzwert überschreitet.

Es ist die Aufgabe der Erfindung, eine zuverlässige und sichere Steuerung einer adaptiven Geschwindigkeitsregelvorrichtung bereitzustellen.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Erfindungsgemäß wird ein Verfahren zur Steuerung einer adaptiven Geschwindigkeitsregelvorrichtung in einem Kraftfahrzeug bereitgestellt. In einem ersten Schritt erfolgt die Überwachung eines vor dem Kraftfahrzeug befindlichen Verkehrsbereichs. In einem nächsten Schritt erfolgt ein Ermitteln, ob sich im vor dem Kraftfahrzeug befindlichen Fahrweg ein kollisionsrelevantes Objekt befindet. In einem nächsten Schritt erfolgt ein Ansteuern der adaptiven Geschwindigkeitsregelvorrichtung zur Durchführung einer Verzögerung mit einer vordefinierten Bremswirkung des Kraftfahrzeugs, wenn ein kollisionsrelevantes Objekt ermittelt wurde und ein vordefinierter Mindestabstand zu dem vor dem Kraftfahrzeug befindlichen kollisionsrelevanten Objekt unterschritten wird. In einem nächsten Schritt erfolgt ein Überprüfen, ob ein Fahrer des Kraftfahrzeugs während der durch die adaptive Geschwindigkeitsregelvorrichtung durchgeführten Verzögerung ein Bremspedal betätigt. Die durch die Pedalwirkung angeforderte Bremswirkung wird ausgeübt, falls diese die durch die adaptive Geschwindigkeitsregelvorrichtung ausgeübte Bremswirkung überschreitet, ohne dabei die adaptive Geschwindigkeitsregelvorrichtung zu deaktivieren.

Die Erfindung hat den Vorteil, dass die durch die adaptive Geschwindigkeitsregelvorrichtung berechnete, erforderliche Bremswirkung zumindest aufrechterhalten, aber nicht verringert wird, wenn der Fahrer des Kraftfahrzeugs das Bremspedal betätigt. Ferner wird sichergestellt, dass die adaptive Geschwindigkeitsregelvorrichtung auch dann die Bremswirkung aufrechterhalten kann, wenn der Fahrer durch die Pedalbetätigung zunächst stark genug abbremst, im weiteren Verlauf jedoch wegen einer nachlassenden Pedalbetätigung eine erforderliche Bremswirkung unterschreiten würde. So wird sichergestellt, dass der durch die adaptive Geschwindigkeitsregelvorrichtung berechnete maximale Bremsweg nicht überschritten bzw. eingehalten wird, wodurch gefährliche Situationen vermieden und mögliche Kollisionen verhindert werden können. Gleichzeitig wird sichergestellt, dass der Fahrer des Kraftfahrzeugs weiterhin das Gefühl vermittelt bekommt, die vollständige Kontrolle über das Fahrzeug zu haben. Dies steigert die Akzeptanz für derartige Systeme.

Es ist auch möglich, dass in Fällen, in denen der Fahrer im weiteren Verlauf des Bremsvorgangs den Fuß wieder vom Pedal nimmt, und so keine Bremswirkung mehr anfordert, die durch die adaptive Geschwindigkeitsregelvorrichtung ausgeübte Bremswirkung reduziert werden kann, ohne dabei den Bremsweg zu verlängern. Mit anderen Worten wird initial die durch die Pedalwirkung angeforderte Bremswirkung ausgeübt, falls diese die durch die adaptive Geschwindigkeitsregelvorrichtung ausgeübte Bremswirkung überschreitet, ohne dabei die adaptive Geschwindigkeitsregelvorrichtung zu deaktivieren. So wird das Kraftfahrzeug zunächst etwas stärker abgebremst als initial durch das ACC vorgesehen, der Bremsweg wird also um einen gewissen Betrag verringert. Wenn der Fahrer den Fuß nun wieder vom Bremspedal nimmt, kann das ACC eine Bremswirkung ausüben, die um einen gewissen Betrag unter der initial vom ACC ausgeübten Bremswirkung liegt, ohne dadurch den Bremsweg zu verlängern. Dies hat den Vorteil eines gesteigerten Komforts, weil der Bremsvorgang in solchen Fällen sanfter erfolgen kann. Weiterhin kann dadurch die mechanische Belastung der Bremsen verringert werden, was insgesamt zur Verlängerung der Lebensdauer beitragen kann.

Ein Kraftfahrzeug im Rahmen der Erfindung kann als ein angetriebenes Fahrzeug verstanden werden. Ein Kraftfahrzeug im Rahmen der Erfindung kann insbesondere ein Personenkraftwagen sein.

Ein adaptives Geschwindigkeitsregelsystem (ACC, Adaptive Cruise Control) im Rahmen der Erfindung kann verstanden werden als ein Fahrerassistenzsystem für Kraftfahrzeuge, das die Geschwindigkeit des Kraftfahrzeugs automatisch anpasst, um einen sicheren Abstand zu vorausfahrenden Fahrzeugen zu halten. Ein ACC umfasst typischerweise Sensoren wie Radar,-Gierraten-, Querbeschleunigungs-, Raddrehzahl-, und Lenkwinkelsensoren bzw. kann auf derartige Sensoren zugreifen. Es kann ferner beispielsweise Sensoren wie Radar, LiDAR oder Kameras nutzen, um die Umgebung zu überwachen, Objekte zu erkennen und zuzuordnen und regelt beispielsweise Beschleunigung sowie Bremskraft, sodass der Fahrer die Geschwindigkeit nicht manuell regeln muss. Das ACC agiert dabei typischerweise mit weiteren Systemen wie beispielsweise dem Elektronischen Stabilisierungs-Programm (ESP) oder Antiblockiersystem (ABS), damit auch ein Eingriff dieser Systeme jederzeit möglich ist, wenn eine Gefahrensituation dies erfordert. Die für ein ACC maximal nutzbare Verzögerung liegt typischerweise in einem Bereich von 3 m/s² bis 4 m/s².

Ein vor dem Kraftfahrzeug befindlicher Verkehrsbereichs im Rahmen der Erfindung kann verstanden werden als der gesamte Bereich, der sich vor dem Kraftfahrzeug befindet, also beispielsweise die Fahrbahn, auf der das Kraftfahrzeug fährt, und der Bereich rechts, links und oberhalb der Fahrbahn, also beispielsweise der Fahrbahnrand einschließlich Fahrbahnbegrenzungen wie Leitplanken oder Bürgersteige. Der genannte Bereich umfasst also auch Bereiche, in denen Verkehrsschilder angeordnet sein können.

Ein kollisionsrelevantes Objekt im Rahmen der Erfindung kann verstanden werden als Objekt, welches sich entweder auf dem aktuellen Fahrweg des Kraftfahrzeugs befindet oder diesen Fahrweg so kreuzt, dass bei Beibehaltung der aktuellen Geschwindigkeit und Fahrtrichtung sowohl des Kraftfahrzeugs als auch des Objekts eine Kollision unvermeidbar wäre. Das Objekt kann sowohl statisch als auch dynamisch sein, sich also direkt auf der Fahrspur befinden oder sich in eine Richtung bewegen, der zur Fahrspur führt.

Ein vordefinierter Mindestabstand zu dem vor dem Kraftfahrzeug befindlichen kollisionsrelevanten Objekt im Rahmen der Erfindung kann verstanden werden als der Abstand, der erforderlich ist, damit das Kraftfahrzeug bei Beibehaltung der aktuellen Geschwindigkeit und einer Bremsung mit der maximal verfügbaren Bremsverzögerung rechtzeitig zum Stillstand kommt, ohne eine Kollision zu verursachen. Der Mindestabstand berücksichtigt dabei typischerweise die Reaktionszeit des Systems und/oder des Fahrers sowie den Bremsweg und/oder einen gesetzlich vorgeschriebenen Sicherheitsabstand. Ein vordefinierter Mindestabstand zu dem vor dem Kraftfahrzeug befindlichen kollisionsrelevanten Objekt kann insbesondere mindestens einem gesetzlich vorgeschriebenen Sicherheitsabstand entsprechen.

In weiterer Ausgestaltung der Erfindung kann es vorgesehen sein, dass das kollisionsrelevante Objekt folgende Objekte umfasst: ein anderes Kraftfahrzeug, eine Person, ein Tier oder ein statisches Hindernis. Nicht beschränkende Beispiele für eine Person sind ein Fußgänger, ein Jogger, ein Radfahrer oder ein Rollerfahrer, die sich auf oder in der Nähe der Fahrspur des Fahrzeugs bewegen oder diese queren. Nicht beschränkende Beispiele für ein Tier sind größere Wildtiere wie Rehe, Hirsche oder Kühe, aber auch kleinere Tiere wie Hunde oder Katzen, die sich auf der Fahrbahn befinden oder diese zu kreuzen drohen. Nicht beschränkende Beispiele für ein statisches Hindernis sind parkende Fahrzeuge, umgestürzte Bäume, heruntergefallene Ladungen wie Kisten oder Reifen sowie Baustellenabsperrungen oder -barrieren. Dies hat den Vorteil, dass typische kollisionsrelevante Objekte berücksichtigt werden, was die Zuverlässigkeit in verschiedenen Verkehrsszenarien steigert. Ferner ermöglicht die Unterscheidung zwischen statischen und dynamischen Objekten dem Verfahren eine bessere Reaktionsstrategie, beispielsweise durch eine Anpassung an spezifische Verkehrsbedingungen. So kann ein sehr schnelles Abbremsen bei plötzlich auftauchenden Hindernissen wie z. B. Radfahrern erfolgen und ein moderateres Abbremsen wenn sich ein anderes Kraftfahrzeug vor dem eigenen Kraftfahrzeug befindet, welches beispielsweise nur leicht abbremst. Eine Definition solcher Objektkategorien erlaubt somit die Verwendung spezifischer Algorithmen für die Erkennung und Reaktion der jeweiligen Kategorien. Dies führt zu einer höheren Genauigkeit und Effizienz.

In einer Ausgestaltung der Erfindung kann es vorgesehen sein, dass das kollisionsrelevante Objekt anhand eines oder mehrerer Sensordaten verifiziert wird, wobei die Sensordaten Daten einer Kamera, eines Radarsensors, eines LiDAR-Sensors, eines Ultraschall-Sensors, einer Time-of-Flight-Kamera, oder einer Kombination daraus umfassen. Durch die Verifikation mittels mehrerer Sensordaten können Falschmeldungen minimiert werden. Einzelne Sensoren können aufgrund ihrer spezifischen Limitierungen (z. B. Radarreflexionen von Leitplanken oder Kamerafehler bei schlechtem Licht) zu Fehlalarmen führen, die durch die Kombination von Daten mehrerer Sensoren reduziert werden. Die Fusion verschiedener Sensordaten ermöglicht ferner eine bessere Differenzierung zwischen tatsächlichen Hindernissen und irrelevanten Objekten wie beispielsweise Schatten, Reflexionen oder Schildern.

In einer Ausgestaltung der Erfindung kann es vorgesehen sein, dass die durch die Pedalwirkung angeforderte Bremswirkung stufenlos mit einem proportionalen Anstieg des Bremsmoments ausgeübt wird. Ein stufenloser, proportionaler Anstieg des Bremsmoments ermöglicht eine gleichmäßige Verzögerung, wodurch Ruckeln oder abrupte Bremsmanöver vermieden werden. Dies erhöht den Komfort für Fahrer und Passagiere. Ferner erlebt der Fahrer des Kraftfahrzeugs eine vorhersehbare und nachvollziehbare Bremswirkung, die direkt auf die Pedalbewegung abgestimmt ist, was die Akzeptanz des Systems steigert. Durch den proportionalen Anstieg wird außerdem das Risiko von Bremsblockaden oder instabilen Fahrsituationen minimiert, insbesondere bei plötzlichen Bremsmanövern oder auf glatten Fahrbahnen.

In einer Ausgestaltung der Erfindung kann es vorgesehen sein, dass die durch die Pedalwirkung angeforderte Bremswirkung erst dann ausgeübt wird, wenn diese einen vordefinierten ersten Schwellenwert überschreitet, ohne dabei die adaptive Geschwindigkeitsregelvorrichtung zu deaktivieren; und die durch die Pedalwirkung angeforderte Bremswirkung wird erst dann ausgeübt, wenn diese einen vordefinierten zweiten Schwellenwert übersteigt, wobei die adaptive Geschwindigkeitsregelvorrichtung deaktiviert wird, wobei der erste Schwellenwert kleiner ist als der zweite Schwellenwert und wobei der erste und der zweite Schwellenwert betragsmäßig größer sind als die Bremswirkung der adaptiven Geschwindigkeitsregelvorrichtung. Dies hat den Vorteil, dass das System insgesamt etwas komfortabler reagiert, sodass die durch die Pedalwirkung angeforderte Bremswirkung nicht schon dann ausgeübt wird, wenn diese nur geringfügig über der durch die adaptive Geschwindigkeitsregelvorrichtung ausgeübten Bremswirkung liegt. Eine erste Schwelle kann demnach einer Bremswirkung entsprechen, die zwischen 0,1 % und 10 %, oder zwischen 0,1 % und 5 %, oder zwischen 1 % und 4 % über der durch die adaptive Geschwindigkeitsregelvorrichtung ausgeübten Bremswirkung liegt. Andererseits kann das System auch deaktiviert werden, wenn der Fahrer mit vergleichsweise großer Kraft das Bremspedal betätigt. Dies kann vorteilhaft sein, wenn der Fahrer spontan eine deutlich höhere Bremswirkung beabsichtigt, als durch das ACC vorgesehen oder technisch möglich ist. Eine zweite Schwelle kann einer Bremswirkung entsprechen, die zwischen 20 % und 100 %, oder zwischen 30 % und 100 %, oder zwischen 40 % und 100 %, oder zwischen 50 % und 100 % über der durch die adaptive Geschwindigkeitsregelvorrichtung ausgeübten Bremswirkung liegt.

In einer Ausgestaltung der Erfindung kann es vorgesehen sein, dass durch die Betätigung des Bremspedals eine Deaktivierung der adaptiven Geschwindigkeitsregelvorrichtung erfolgt, wenn kein kollisionsrelevantes Objekt erfasst wird und die adaptive Geschwindigkeitsregelvorrichtung eine Verzögerung aufgrund einer Geschwindigkeitsbegrenzung durchführt. Da eine Geschwindigkeitsbegrenzung als solche kein unmittelbares Sicherheitsrisiko darstellt, kann das ACC in solchen Situationen auch ohne weitere Bedingungen deaktiviert werden, ohne die Sicherheit unmittelbar zu gefährden. Dies erhöht den Komfort des Systems und entspricht den Erwartungen des Nutzers, wenn z.B. wegen einer Ampel, einer Kreuzung etc. ein Bremsvorgang angefordert wird, und nach Betätigen des Bremspedals vom Nutzer nicht erwartet wird, dass das Fahrzeug selbst wieder anfährt.

In einer Ausgestaltung der Erfindung kann es vorgesehen sein, dass durch die Betätigung des Bremspedals eine Deaktivierung der adaptiven Geschwindigkeitsregelvorrichtung erfolgt, wenn kein kollisionsrelevantes Objekt erfasst wird und die adaptive Geschwindigkeitsregelvorrichtung eine Beschleunigung durchführt oder das Kraftfahrzeug auf einer konstanten Geschwindigkeit hält. Da eine Erhöhung oder Aufrechterhaltung einer bestimmten Geschwindigkeit als solches kein unmittelbares Sicherheitsrisiko darstellt, kann das ACC in solchen Situationen auch ohne weitere Bedingungen deaktiviert werden, ohne die Sicherheit unmittelbar zu gefährden. Dies erhöht den Komfort des Systems.

In einer Ausgestaltung der Erfindung kann es vorgesehen sein, dass der Fahrer die adaptive Geschwindigkeitsregelvorrichtung über ein am Lenkrad oder im Bereich des Lenkrads angeordnetes Bedienelement deaktivieren kann. So steht dem Fahrer jederzeit eine weitere Möglichkeit zur Verfügung, um das ACC zu deaktivieren, was die Akzeptanz solcher Systeme erhöht.

Erfindungsgemäß ist auch ein System vorgesehen, welches dazu ausgelegt ist, das erfindungsgemäße Verfahren durchzuführen. Das System kann mit der adaptiven Geschwindigkeitsvorrichtung interagieren bzw. diese ansteuern. Das System kann eine physisch integrierte Einheit oder eine logisch zusammenwirkende Einheit aus mehreren Steuergeräten umfassen, die über eine Kommunikationsschnittstelle verbunden sind und gemeinsam die Funktionalität des erfindungsgemäßen Verfahrens bereitstellen, unabhängig davon, ob die Funktionalität vollständig oder teilweise durch eines oder mehrere Steuergeräte bereitgestellt wird, wobei die Steuergeräte zusammenwirken können, um die Logik des Verfahrens zu implementieren. Beispiele für solche Steuergeräte sind: ACC-Steuergerät, Motorsteuergerät, Bremsen-Steuergerät, Kamera-Steuergerät, Radar-Steuergerät, LiDAR-Steuergerät, Ultraschallsensor-Steuergerät, Time-of-Flight-Kamera-Steuergerät. Zudem kann das System einen oder mehrere Sensoren aufweisen, um das Verfahren durchzuführen. Zum Beispiel kann das System einen Radar-Sensor zu Überwachung des vor dem Kraftfahrzeug liegenden Verkehrsbereichs zu überwachen. Alternativ oder zusätzlich kann das System auch andere Mittel zur Überwachung des vor dem Kraftfahrzeug liegenden Verkehrsbereichs aufweisen.

Erfindungsgemäß ist auch ein Kraftfahrzeug vorgesehen, welches das erfindungsgemäße System oder mögliche Ausgestaltungen des erfindungsgemäßen Systems aufweist.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs mit einer adaptiven Geschwindigkeitsregelvorrichtung (ACC), einem System zur Durchführung des erfindungsgemäßen Verfahrens, einer Sensorvorrichtung und einer Bremsvorrichtung;
- Fig. 2a-c: eine schematische Darstellung des Kraftfahrzeugs in drei unterschiedlichen Fahrsituationen, wobei in jeder der drei Fahrsituationen jeweils das Kraftfahrzeug und ein weiteres, an einer roten Ampel haltendes Fahrzeug gezeigt sind;
- Fig. 3a: eine schematische Darstellung eines Geschwindigkeits-Zeit-Diagramms für die jeweils in Fig. 2a - 2c gezeigten Fahrsituationen ohne Durchführung des erfindungsgemäßen Verfahrens;
- Fig. 3b: eine schematische Darstellung eines Beschleunigungs-Zeit-Diagramms für die jeweils in Fig. 2a - 2c gezeigten Fahrsituationen ohne Durchführung des erfindungsgemäßen Verfahrens;
- Fig. 4a: eine schematische Darstellung eines Geschwindigkeits-Zeit-Diagramms für die jeweils in Fig. 2a - 2c gezeigten Fahrsituationen mit Durchführung des erfindungsgemäßen Verfahrens;
- Fig. 4b: eine schematische Darstellung eines Beschleunigungs-Zeit-Diagramms für die jeweils in Fig. 2a - 2c gezeigten Fahrsituationen mit Durchführung des erfindungsgemäßen Verfahrens;

Gleiche oder funktionsgleiche Elemente sind in den Figuren mit den gleichen Bezugszeichen versehen.

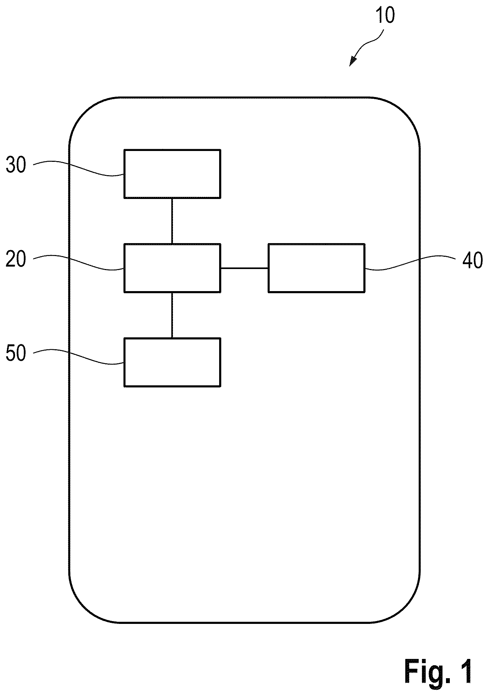

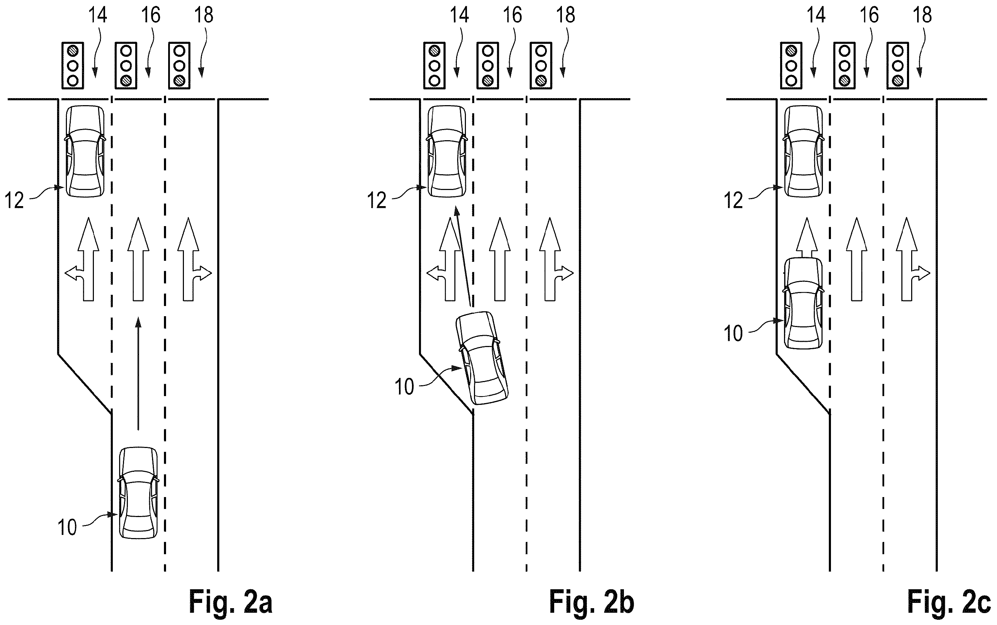

Ein Kraftfahrzeug 10 ist in einer schematischen Darstellung in Fig. 1 gezeigt. Das Kraftfahrzeug 10 umfasst eine adaptive Geschwindigkeitsregelvorrichtung (ACC) 20 sowie ein System 30 zur Durchführung des erfindungsgemäßen Verfahrens, welches u. a. mit dem ACC 20 interagieren kann. Ferner gezeigt sind eine Sensorvorrichtung 40 und eine Bremsvorrichtung 50. Das ACC 20 kann von der Sensorvorrichtung 40 Sensordaten 42 empfangen und die Bremsvorrichtung 50 ansteuern. Die Sensorvorrichtung 40 kann beispielsweise eine Kamera, einen Radarsensor und einen LiDAR-Sensor umfassen. Es wird vorliegend angenommen, dass das Kraftfahrzeug 10 von einem Fahrer gesteuert wird. Die Sensorvorrichtung 40 kann abweichend von der schematischen Darstellung in Fig. 1 Bestandteil des Systems 30 sein. Das System 30 kann eine physisch integrierte Einheit oder eine logisch zusammenwirkende Einheit aus mehreren Steuergeräten umfassen, die über eine Kommunikationsschnittstelle verbunden sind und gemeinsam die Funktionalität des anhand der Fig. 2a - 4b nachfolgend beschriebenen Verfahrens bereitstellen.

Das Kraftfahrzeug 10 ist in einer schematischen Darstellung in drei unterschiedlichen, zeitlich aufeinander folgenden Fahrsituationen in Fig. 2a - 2c gezeigt. In den in den Fig. 2a - 2c dargestellten Fahrsituationen sind jeweils drei Fahrspuren 14, 16, 18 zu sehen. Auf der linken Fahrspur 14, die sowohl in Geradeaus- als auch in Linksabbieger-Richtung führt, befindet sich dabei als kollisionsrelevantes Objekt 12 ein anderes Kraftfahrzeug, nachfolgend als Fremdfahrzeug 12 bezeichnet, das an einer roten Ampel hält. Die mittlere Fahrspur 16 führt in Geradeausrichtung und die rechte Fahrspur 18 führt in Geradeaus- und Rechtsabbieger-Richtung, wobei für die mittlere Fahrspur 16 und die rechte Fahrspur 18 ein Grünsignal gezeigt ist, was durch die jeweils darüber gezeichneten Ampeln angedeutet werden soll.

Das System 30 des Kraftfahrzeugs 10 überwacht den vor dem Kraftfahrzeug 10 befindlichen Verkehrsbereich und ermittelt, ob sich im vor dem Kraftfahrzeug 10 befindlichen Fahrweg ein kollisionsrelevantes Objekt 12 befindet. Die Sensorvorrichtung 40 kann dafür notwendige Umfelddaten bereitstellen.

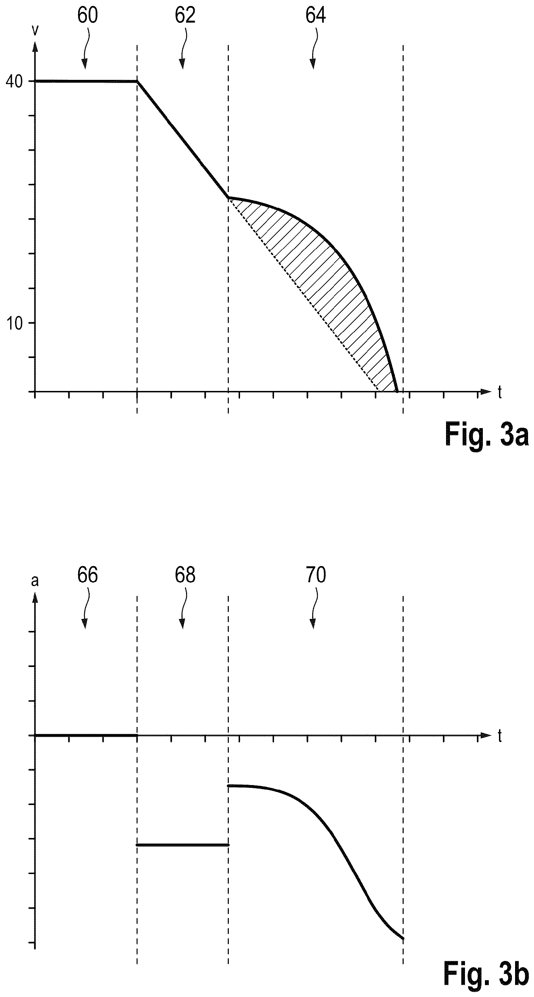

In Fig. 2a befährt das Kraftfahrzeug 10 mit konstanter Geschwindigkeit und aktiviertem ACC 20 die mittlere Fahrspur 16, für die das grüne Ampelsignal gezeigt ist, in Geradeaus-Richtung. Es befindet sich demnach kein kollisionsrelevantes Objekt im vor dem Kraftfahrzeug 10 befindlichen Fahrweg auf der Fahrspur 16. Der Abschnitt 60 in Fig. 3a zeigt den Ausschnitt des Geschwindigkeits-Zeit-Diagramms, der die in Fig. 2a gezeigte Fahrsituation widerspiegelt, d. h. die konstante Geschwindigkeit des Kraftfahrzeugs 10. Der Abschnitt 66 in Fig. 3b zeigt das dazugehörige Beschleunigungs-Zeit-Diagramm, d. h. die konstante Beschleunigung des Betrags Null des Kraftfahrzeugs 10.

In der in Fig. 2b gezeigten Fahrsituation wechselt das Kraftfahrzeug 10 von der mittleren Fahrspur 16 auf die linke Fahrspur 14. Auf der linken Fahrspur 14 hält das Fremdfahrzeug 12 an der roten Ampel. Das System 30 erkennt das Fremdfahrzeug 12 als kollisionsrelevantes Objekt.

Das Fremdfahrzeug 12 wird anhand eines oder mehrerer von der Sensorvorrichtung 40 bereitgestellten Sensordaten 42, verifiziert, wobei die Sensordaten 42 beispielsweise Daten einer Kamera, eines Radarsensors und eines LiDAR-Sensors umfassen. Das System 30 steuert die adaptive Geschwindigkeitsregelvorrichtung 20 zur Durchführung einer Verzögerung mittels der Bremsvorrichtung 50 mit einer vordefinierten Bremswirkung des Kraftfahrzeugs 10 an, weil das Fremdfahrzeug 12 als kollisionsrelevantes Objekt ermittelt wurde und, weil das Fremdfahrzeug 12 an der roten Ampel hält, einen vordefinierten Mindestabstand zu dem Kraftfahrzeug 10 unterschreitet. Das Kraftfahrzeug 10 würde also ohne Verringerung seiner Geschwindigkeit auf das Fremdfahrzeug 12 auffahren. Das ACC 20 bremst das Kraftfahrzeug 10 deswegen mit einer definierten Bremswirkung ab. Der Abschnitt 62 in Fig. 3a zeigt den Abschnitt des Geschwindigkeits-Zeit-Diagramms, der die in Fig. 2b gezeigte Fahrsituation widerspiegelt, d. h. die abnehmende Geschwindigkeit des Kraftfahrzeugs 10. Der Abschnitt 68 in Fig. 3b ist der Abschnitt des dazugehörigen Beschleunigungs-Zeit-Diagramm, d. h. die konstante negative Beschleunigung (Verzögerung) des Kraftfahrzeugs 10.

In der in Fig. 2c gezeigten Fahrsituation befindet sich das Kraftfahrzeug 10 nun vollständig auf der linken Fahrspur 14, wobei das ACC 20 das Kraftfahrzeug 10 weiter abbremst. Der Bereich 64 in Fig. 3a ist der Abschnitt des Geschwindigkeits-Zeit-Diagramms, der die in Fig. 2c gezeigte Fahrsituation andeutet, d. h. die durch das ACC 20 ausgeübte Bremswirkung weiter abnehmende Geschwindigkeit des Kraftfahrzeugs 10 (gestrichelte Linie). Das System 30 überprüft nun, ob der Fahrer des Kraftfahrzeugs 10 während der durch das ACC 20 durchgeführten Verzögerung ein Bremspedal betätigt. In der in Fig. 2c dargestellten Fahrsituation könnte der Fahrer des Kraftfahrzeugs 10 geneigt sein, das Bremspedal zu betätigen, weil er sich beispielsweise unsicher ist, ob das ACC 20 das Kraftfahrzeug 10 auch sicher abbremsen wird. Wenn der Fahrer des Kraftfahrzeugs 10 nun selbst unter Deaktivierung des ACC 20 bremsen würde, dabei aber eine geringere Bremswirkung ausüben würde, als durch das ACC 20 vorgesehen wäre, dann würde sich der in Fig. 3a im Bereich 64 als durchgezogene Linie angedeutete Bremsweg ergeben. Dieser wäre betragsmäßig um die in Fig. 3a, Abschnitt 64, schraffiert gezeigte Fläche größer, d. h. der durch die alleinige Verzögerung des Fahrers verursachte Bremsweg würde sich verlängern.

In Fig. 3b ist das dazugehörige Beschleunigungs-Zeit-Diagramm gezeigt, wobei Abschnitt 70 die in Fig. 2c gezeigte Fahrsituation widerspiegelt, d. h. die negative Beschleunigung (Verzögerung) des Kraftfahrzeugs 10, welche der Fahrer des Kraftfahrzeugs 10 durch die Betätigung des Bremspedals ausübt. Diese Verzögerung ist anfänglich geringer als die durch das ACC 20 ausgeübte Verzögerung, es ergibt sich also beim Übergang von der in Fig. 2b zu der in Fig. 2c gezeigten Fahrsituation ein Sprung in der negativen Beschleunigung.

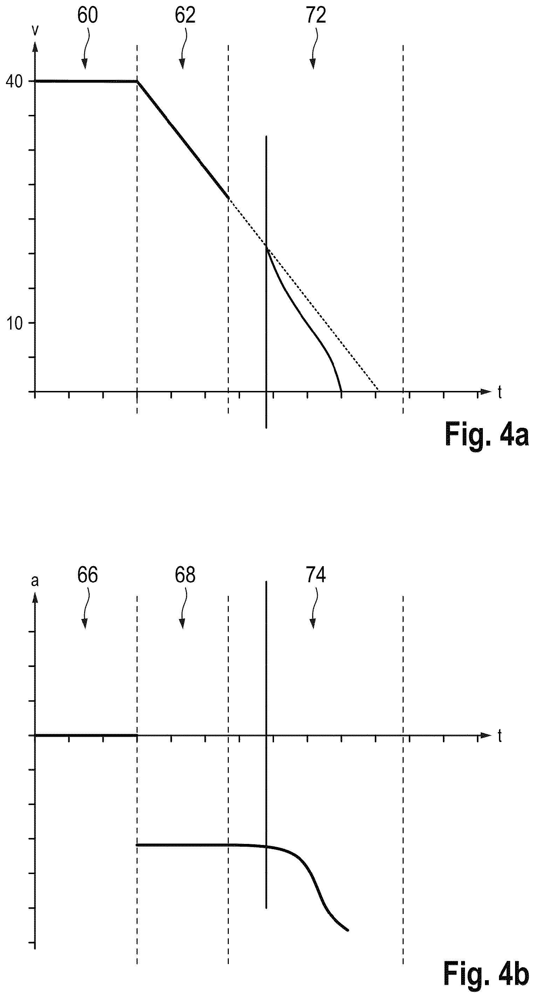

Erfindungsgemäß wird nun aber die durch die Pedalwirkung angeforderte Bremswirkung nur ausgeübt, falls diese die durch das ACC 20 ausgeübte Bremswirkung überschreitet, ohne dabei das ACC 20 zu deaktivieren. Dies ist in dem in Fig. 4a gezeigten Geschwindigkeits-Zeit-Diagramm im Abschnitt 72 dargestellt: Die ohne eine Betätigung des Bremspedals durch den Fahrer des Kraftfahrzeugs 10 nur durch das ACC 20 ausgeübte Reduzierung der Geschwindigkeit ist durch die gestrichelte Linie angedeutet. Übt der Fahrer des Kraftfahrzeugs 10 nun eine höhere Bremswirkung aus, wird die Geschwindigkeit stärker reduziert als initial durch das ACC 20 vorgesehen, was durch die durchgehend gezeichnete Linie angedeutet ist. Der zugehörige Verlauf der Beschleunigung ist in dem in Fig. 4b gezeigten Beschleunigungs-Zeit-Diagramm in Abschnitt 74 gezeigt: In dem Moment, in dem der Fahrer des Kraftfahrzeugs 10 eine stärkere Bremswirkung als das ACC 20 erzeugt, wird die negative Beschleunigung bzw. Verzögerung ebenfalls verstärkt.

Dabei wird die durch die Pedalwirkung angeforderte Bremswirkung stufenlos mit einem proportionalen Anstieg des Bremsmoments ausgeübt, was in Fig. 4b, Abschnitt 74 angedeutet ist. Der Übergang erfolgt also fließend statt ruckartig und führt so zu einem höheren Fahrkomfort.

Die durch die Pedalwirkung angeforderte Bremswirkung wird erst dann ausgeübt, wenn diese einen vordefinierten ersten Schwellenwert überschreitet, ohne dabei die adaptive Geschwindigkeitsregelvorrichtung zu deaktivieren (vorliegend nicht gezeigt). Die durch den Fahrer des Kraftfahrzeugs 10 angeforderte Bremswirkung wird also erst ausgeübt, wenn diese beispielsweise um 0,5 % über der vom ACC 20 initial ausgeübten Bremswirkung liegt, damit das System nicht schon bei geringfügiger Überschreitung der durch das ACC 20 initial ausgeübten Bremswirkung durch den Fahrer reagiert. Ferner wird die durch die Pedalwirkung angeforderte Bremswirkung erst dann ausgeübt, wenn diese einen vordefinierten zweiten Schwellenwert übersteigt, wobei die adaptive Geschwindigkeitsregelvorrichtung deaktiviert wird. So kann der Fahrer beispielsweise durch einen kurzen, starken Druck auf das Bremspedal das ACC 20 deaktivieren. In beiden Fällen ist der erste Schwellenwert kleiner als der zweite Schwellenwert und der erste und der zweite Schwellenwert ist betragsmäßig größer als die Bremswirkung der adaptiven Geschwindigkeitsregelvorrichtung.

In einer wie in Fig. 2a gezeigten Fahrsituation erfolgt durch die Betätigung des Bremspedals eine Deaktivierung des ACC 20 auch dann, wenn kein kollisionsrelevantes Objekt erfasst wird und die adaptive Geschwindigkeitsregelvorrichtung eine Verzögerung aufgrund einer durch ein Verkehrsschild gebotenen Geschwindigkeitsbegrenzung (vorliegend nicht gezeigt) durchführt.

Ferner erfolgt in einer wie in Fig. 2a gezeigten Fahrsituation eine Deaktivierung des ACC 20 durch die Betätigung des Bremspedals auch dann, wenn kein kollisionsrelevantes Objekt erfasst wird und die adaptive Geschwindigkeitsregelvorrichtung 20 eine Beschleunigung durchführt (vorliegend nicht gezeigt) oder das Kraftfahrzeug 10 auf einer konstanten Geschwindigkeit hält.

Der Fahrer kann die adaptive Geschwindigkeitsregelvorrichtung 20 ferner über ein am Lenkrad oder im Bereich des Lenkrads angeordnetes Bedienelement deaktivieren, beispielsweise in einer wie in Fig. 2a gezeigten Fahrsituation, in der ein freies Befahren der Fahrspur 16 möglich ist.

### Bezugszeichenliste

- 10: Kraftfahrzeug
- 12: Fremdfahrzeug
- 14: Linke Fahrspur
- 16: Mittlere Fahrspur
- 18: Rechte Fahrspur
- 20: Adaptive Geschwindigkeitsregelvorrichtung (ACC)
- 30: System
- 40: Sensorvorrichtung
- 42: Sensordaten
- 50: Bremsvorrichtung
- 60: Abschnitt im Geschwindigkeits-Zeit-Diagramm
- 62: Weiterer Abschnitt im Geschwindigkeits-Zeit-Diagramm
- 64: Weiterer Abschnitt im Geschwindigkeits-Zeit-Diagramm
- 66: Abschnitt im Beschleunigungs-Zeit-Diagramm
- 68: Weiterer Abschnitt im Beschleunigungs-Zeit-Diagramm
- 70: Weiterer Abschnitt Beschleunigungs-Zeit-Diagramm
- 72: Weiterer Abschnitt im Geschwindigkeits-Zeit-Diagramm
- 74: Weiterer Abschnitt Beschleunigungs-Zeit-Diagramm

## Patentansprüche

1. Verfahren zur Steuerung einer adaptiven Geschwindigkeitsregelvorrichtung (20) in einem Kraftfahrzeug (10), umfassend die Schritte:
- Überwachung eines vor dem Kraftfahrzeug (10) befindlichen Verkehrsbereichs;
- Ermitteln, ob sich im vor dem Kraftfahrzeug (10) befindlichen Fahrweg ein kollisionsrelevantes Objekt (12) befindet;
- Ansteuern der adaptiven Geschwindigkeitsregelvorrichtung (20) zur Durchführung einer Verzögerung mit einer vordefinierten Bremswirkung des Kraftfahrzeugs (10), wenn ein kollisionsrelevantes Objekt (12) ermittelt wurde und ein vordefinierter Mindestabstand zu dem vor dem Kraftfahrzeug (10) befindlichen kollisionsrelevanten Objekt (12) unterschritten wird;
- Überprüfen, ob ein Fahrer des Kraftfahrzeugs (10) während der durch die adaptive Geschwindigkeitsregelvorrichtung (20) durchgeführten Verzögerung ein Bremspedal betätigt;
wobei die durch die Pedalwirkung angeforderte Bremswirkung ausgeübt wird, falls diese die durch die adaptive Geschwindigkeitsregelvorrichtung (20) ausgeübte Bremswirkung überschreitet, ohne dabei die adaptive Geschwindigkeitsregelvorrichtung (20) zu deaktivieren.

2. Verfahren nach Anspruch 1, wobei das kollisionsrelevante Objekt (12) folgende Objekte umfasst: ein anderes Kraftfahrzeug, eine Person, ein Tier oder ein statisches Hindernis.

3. Verfahren nach einem der vorhergehenden Ansprüche, wobei das kollisionsrelevante Objekt (12) anhand eines oder mehrerer Sensordaten verifiziert wird, wobei die Sensordaten Daten einer Kamera, eines Radarsensors, eines LiDAR-Sensors, eines Ultraschall-Sensors, einer Time-of-Flight-Kamera, oder einer Kombination daraus umfassen.

4. Verfahren nach einem der vorhergehenden Ansprüche, wobei die durch die Pedalwirkung angeforderte Bremswirkung stufenlos mit einem proportionalen Anstieg des Bremsmoments ausgeübt wird.

5. Verfahren nach einem der vorhergehenden Ansprüche, wobei
- die durch die Pedalwirkung angeforderte Bremswirkung erst dann ausgeübt wird, wenn diese einen vordefinierten ersten Schwellenwert überschreitet, ohne dabei die adaptive Geschwindigkeitsregelvorrichtung (20) zu deaktivieren; und
- die durch die Pedalwirkung angeforderte Bremswirkung erst dann ausgeübt wird, wenn diese einen vordefinierten zweiten Schwellenwert übersteigt, wobei die adaptive Geschwindigkeitsregelvorrichtung (20) deaktiviert wird;
wobei der erste Schwellenwert kleiner ist als der zweite Schwellenwert und wobei der erste und der zweite Schwellenwert betragsmäßig größer sind als die Bremswirkung der adaptiven Geschwindigkeitsregelvorrichtung (20).

6. Verfahren nach einem der vorhergehenden Ansprüche, wobei durch die Betätigung des Bremspedals eine Deaktivierung der adaptiven Geschwindigkeitsregelvorrichtung (20) erfolgt, wenn kein kollisionsrelevantes Objekt (12) erfasst wird und die adaptive Geschwindigkeitsregelvorrichtung (20) eine Verzögerung aufgrund einer Geschwindigkeitsbegrenzung durchführt.

7. Verfahren nach einem der vorhergehenden Ansprüche, wobei durch die Betätigung des Bremspedals eine Deaktivierung der adaptiven Geschwindigkeitsregelvorrichtung (20) erfolgt, wenn kein kollisionsrelevantes Objekt (12) erfasst wird und die adaptive Geschwindigkeitsregelvorrichtung (20) eine Beschleunigung durchführt oder das Kraftfahrzeug (10) auf einer konstanten Geschwindigkeit hält.

8. Verfahren nach einem der vorhergehenden Ansprüche, wobei der Fahrer die adaptive Geschwindigkeitsregelvorrichtung (20) über ein am Lenkrad oder im Bereich des Lenkrads angeordnetes Bedienelement deaktivieren kann.

9. System (30), welches dazu ausgelegt ist, ein Verfahren nach einem der vorhergehenden Ansprüche durchzuführen.

10. Kraftfahrzeug (10), mit einem System (30) nach Anspruch 9.
